# EUROPÄISCHE PATENTSCHRIFT

(11) **EP 1 806 501 B1**
(45) Veröffentlichungstag und Bekanntmachung des Hinweises auf die Patenterteilung: **10.09.2008**
(21) Anmeldenummer: 06027046.9
(22) Anmeldetag: 29.12.2006
(51) Int. Cl.: F03G 7/06, F03G 6/00, F01K 25/02

(54) **Verfahren zur Umwandlung thermischer Energie in mechanische Arbeit**
Method to convert thermal energy into mechanical energy
Methode de transformation d'énergie thermique en énergie mécanique

(30) Priorität: 10.01.2006 AT 322006
(43) Veröffentlichungstag der Anmeldung: 11.07.2007
(73) Patentinhaber: International Innovations Limited, Sydney NSW 2000 (AU)
(72) Erfinder: Hargreaves, Steve, Broadbeach, QLD 4218 (AU); Jegel, Franz Peter, 4407 Steyr/Gleink (AT); Pfeifer, Bernd, 8054 Graz (AT)
(74) Vertreter: Babeluk, Michael

(56) Entgegenhaltungen:
- WO-A-03/081011
- DE-A1- 3 232 497
- US-A- 4 617 801
- US-A- 5 916 140

## Beschreibung

Die vorliegende Erfindung betrifft ein Verfahren zur Umwandlung thermischer Energie in mechanische Arbeit.

Es sind viele Arten von Kreisprozessen und Vorrichtungen bekannt, die dazu dienen, thermische Energie in mechanische Arbeit und gegebenenfalls in weiterer Folge in elektrischen Strom umzuwandeln. Es handelt sich dabei beispielsweise um Dampfkraftprozesse, Sterlingprozesse oder dergleichen. Eine Möglichkeit des Einsatzes solcher Verfahren besteht darin, den Wirkungsgrad von Brennkraftmaschinen zu steigern, indem die Abwärme einer Nutzung unterzogen wird. Problematisch ist dabei jedoch, dass die zur Verfügung stehenden Temperaturniveaus relativ ungünstig sind, da der Kühlkreislauf von Brennkraftmaschine üblicherweise bei Temperaturen arbeitet, die etwa bei 100°C liegen. Ein ähnliches Problem besteht dann, wenn Wärme aus Solaranlagen in mechanische Arbeit übergeführt werden soll.

Eine spezielle Lösung für einen solchen Wärmekraftprozess ist in der WO 03/081011 A gezeigt. In dieser Druckschrift ist ein Verfahren beschrieben, bei dem durch Erwärmung eines Arbeitsmediums in mehreren Blasenspeichern ein Hydraulikmedium unter Druck gesetzt wird, das in einer Arbeitsmaschine abgearbeitet wird. Obwohl ein solches Verfahren grundsätzlich funktionstüchtig ist, hat sich herausgestellt, dass der Wirkungsgrad bescheiden ist und der apparative Aufwand im Verhältnis zur erzeugbaren Energiemenge relativ groß ist.

Die DE 32 32 497 A offenbart ein Verfahren und eine Vorrichtung zur Umwandlung thermischer Energie in mechanische Arbeit mit der Zufuhr von heißem Wärmeträgermedium in einen ersten Arbeitsraum eines Wärmetauschers, mit dem Erwärmen einer ersten Menge eines Arbeitsmediums in einem zweiten Arbeitsraum des Wärmetauschers durch das Wärmeträgermedium und mit dem Verbinden des zweiten Arbeitsraumes des Wärmetauschers mit einer Pneumatik-Hydraulik-Wandler und dem Ausstoßen von einem Hydraulikmedium aus dem Wandler durch den Druck des Arbeitsmediums. Bei dieser Vorrichtung muss der Zylinder abwechselnd erwärmt und gekühlt werden, was aufgrund der vorhandenen Wärmekapazität entsprechende Zeit beansprucht. Die Leistungsfähigkeit einer solchen Vorrichtung ist somit beschränkt.

Die US 4,617,801 A zeigt eine Freikolbenmaschine zur Umwandlung von thermischer Energie in mechanische Arbeit. Dabei werden Pneumatik-Hydraulik-Wandler eingesetzt, um den Druck ins System zu übertragen. Die Vorrichtung besitzt einen komplexen Aufbau und einen bescheidenen Wirkungsgrad.

Weitere Lösungen, die die Umwandlung von Wärme in mechanische Arbeit zeigen, sind in der US 4,283,915 A, der GB 1 536 437 A und der US 5,548,957 A beschrieben, Auch für diese Lösungen gelten die oben beschriebenen Nachteile sinngemäß.

Aufgabe der vorliegenden Erfindung ist es, ein Verfahren der oben beschriebenen Art so auszubilden, dass auch unter thermisch ungünstigen Voraussetzungen ein hoher Wirkungsgrad erreicht werden kann, wobei der aparative Aufbau möglichst gering ist.

Erfindungsgemäß besteht ein solches Verfahren aus folgenden Schritten:
- Zufuhr von heißem Wärmeträgermediums in einen ersten Arbeitsraum eines ersten Wärmetauschers;
- Isochores Erwärmen einer ersten Menge eines Arbeitsmediums in einem zweiten Arbeitsraum des ersten Wärmetauschers durch das Wärmeträgermedium;
- Wiederholtes Durchführen der folgenden Unterschritte:
   - Überströmenlassen zumindest einer Teilmenge der ersten Menge des Arbeitsmediums vom zweiten Arbeitsraum des ersten Wärmetauschers bzw. des vorangehenden Wärmetauschers in einen zweiten Arbeitsraum eines weiteren, nachfolgenden Wärmetauschers;
   - Isochores Erwärmen der übergeströmten Teilmenge der ersten Menge eines Arbeitsmediums im zweiten Arbeitsraum des weiteren, nachfolgenden Wärmetauschers durch ein in einem ersten Arbeitsraum des weiteren, nachfolgenden Wärmetauschers vorliegendes Wärmeträgermedium;
- Verbinden des zweiten Arbeitsraums des weiteren, letzten Wärmetauschers mit einem Pneumatik-Hydraulik-Wandler und Ausstoßen von einem Hydraulikmedium aus dem Wandler durch den Druck des Arbeitsmediums.

Im ersten Schritt wird das beispielsweise von einer Brennkraftmaschine auf 100° erwärmte Wärmeträgermedium in einen ersten Arbeitsraum eines ersten Wärmetauschers eingeführt. Bevorzugterweise handelt es sich bei diesem ersten Wärmetauscher um einen so genannten Blasenspeicher, das ist ein Druckbehälter mit zwei Arbeitsräumen, die durch eine flexible Membran voneinander getrennt sind. Dies bedeutet, dass das Gesamtvolumen der beiden Arbeitsräume im Wesentlichen konstant bleibt, die Einzelvolumina jedoch variabel sind. Über die relativ großflächige flexible Membran kann relativ leicht ein Wärmeaustausch zwischen den Medien stattfinden, die im ersten bzw. im zweiten Arbeitsraum vorliegen. Alternativ dazu könnte der erste Wärmetauscher auch als Zylinder ausgeführt sein, der zwei durch einen Kolben getrennte Arbeitsräume aufweist, solange der Kolben so ausgeführt ist, dass ein Wärmeaustausch leicht möglich ist. Das Wärmeträgermedium wird in diesem ersten Schritt so weit in den ersten Wärmetauscher eingeführt, dass der erste Arbeitsraum etwa die Hälfte des Gesamtvolumens des Wärmetauschers erreicht.

Im zweiten Schritt wird ein Arbeitsmedium, dass im zweiten Arbeitsraum des ersten Wärmetauschers vorliegt, durch das erste Wärmeträgermedium erwärmt. Es handelt sich dabei um den Hauptteil der Erwärmung, da selbstverständlich eine gewisse Erwärmung auch bereits während der Zufuhr des Wärmeträgermediums in den ersten Arbeitsraum erfolgt. Dieser Hauptteil der Erwärmung erfolgt isochor, da sämtliche Ventile, die einen Zugang zum zweiten Arbeitsraum ermöglichen, geschlossen sind. Aufgrund der Temperaturerhöhung im zweiten Arbeitsraum steigt der Druck des Arbeitsmediums entsprechen an.

In einem dritten Schritt wird der zweite Arbeitsraum des ersten Wärmetauschers mit dem zweiten Arbeitsraum eines zweiten Wärmetauschers verbunden, so dass das Arbeitsmedium in diesen Arbeitsraum überströmt. Durch die Entspannung kühlt das übergeströmte Arbeitsmedium ab und gleichzeitig wird durch die Volumenzunahme des zweiten Arbeitsraums des zweiten Wärmetauschers Wärmeträgermedium aus dem ersten Arbeitsraum verdrängt. Dieser Vorgang dauert solange an, bis etwa der erste und der zweite Arbeitsraum des zweiten Wärmetauschers ein etwa gleich großes Volumen aufweisen. Nach dem Schließen der entsprechenden Ventile erfolgt wiederum eine isochore Erwärmung des Arbeitsmediums im zweiten Arbeitsraum des zweiten Wärmetauschers, was den vierten Schritt darstellt.

Je nach Ausführungsvariante des erfindungsgemäßen Verfahrens sind zwei, drei oder mehr Wärmetauscher hintereinander geschalten. Bei Vorliegen von nur zwei Wärmetauschern erfolgt nun im fünften Schritt eine Verbindung des zweiten Arbeitsraums des zweiten Wärmetauschers mit einem Pneumatik-Hydraulik-Wandler, der vorzugsweise ebenfalls als Blasenspeicher ausgebildet ist. Durch das expandierende Arbeitsmedium wird das Hydraulikmedium mit hohem Druck aus dem Pneumatik-Hydraulik-Wandler ausgestoßen, um beispielsweise eine Arbeitsmaschine anzutreiben.

Bei Ausführungsvarianten des Verfahrens mit drei oder mehr Wärmetauschern werden die Schritte drei und vier des Verfahrens entsprechend oft wiederholt. Auf diese Weise können sehr hohe Drücke von 200 bar bis 300 bar erreicht werden, so dass sehr hohe Wirkungsgrade erreichbar sind. Die Effizienz kann insbesondere dadurch gesteigert werden, dass nach Herstellen des Druckausgleichs zwischen dem zweiten Arbeitsraum des vorangehenden Wärmetauschers und dem zweiten Arbeitsraum des nachfolgenden Wärmetauschers weiteres Wärmeträgermedium in den vorangehenden Wärmetauscher gepresst wird, um Arbeitsmedium aus dem zweiten Arbeitsraum des ersten Wärmetauschers bzw. des vorangehenden Wärmetauschers in einen zweiten Arbeitsraum eines weiteren, nachfolgenden Wärmetauschers überzuführen. Es ist natürlich der Einsatz von mechanischer Arbeit erforderlich, um das Arbeitsmedium nach dem Überströmvorgang vollständig aus dem zweiten Arbeitsraum des jeweiligen Wärmetauschers auszutreiben. Diesem Zusatzaufwand steht jedoch eine höhere Energieausbeute gegenüber, was den Wirkungsgrad entsprechend erhöht. Besonders günstig ist es dabei, die zweiten Arbeitsräume der Wärmetauscher vollständig zu entleeren.

Um das abgekühlte Wärmeträgermedium aus den ersten Arbeitsräumen zu entfernen und dadurch Wirkungsgradverluste zu vermeiden, ist vorzugsweise vorgesehen, dass nach Durchlaufen der obigen Schritte die ersten Arbeitsräume vollständig entleert werden. Dies erfolgt durch Einbringen von Arbeitsmedium in die zweiten Arbeitsräume der jeweiligen Wärmetauscher, was praktisch drucklos erfolgen kann.

Wesentlich ist, dass das Arbeitsmedium kompressibel ist, wobei sowohl die Möglichkeit besteht ein gasförmiges Arbeitsmedium zu verwenden, als auch ein Flüssigkeit/Gas-Phasen-Gemisch vorzusehen. Besonders bevorzugt ist es, wenn das Arbeitsmedium einen Siedepunkt bei Umgebungsdruck aufweist, der zwischen - 60°C und -20°C liegt.

Eine besonders begünstigte Ausführungsvariante des erfindungsgemäßen Verfahren sieht vor, dass in regelmäßigen Abständen zeitlich versetzt mehrere Kreisprozesse durchgeführt werden. Dies bedeutet, dass ähnlich wie bei einer Mehrzylinderbrennkraftmaschine zyklische Schwankungen ausgeglichen werden können und insbesondere im Hydrauliksystem eine Vergleichmäßigung des Drucks herbeigeführt werden kann.

Die in das Hydrauliksystem eingespeiste Energie kann in verschiedener Weise verwendet werden. So kann beispielsweise eine Einspeisung in ein Hydrauliknetz erfolgen, um hydraulische Arbeitsmaschinen anzutreiben. Primär ist jedoch die Erzeugung von elektrischem Strom über einen Generator vorgesehen, der von einer hydraulischen Arbeitsmaschine angetrieben wird.

Da bei der Entspannung des Arbeitsmediums aus dem zweiten Arbeitsraum des letzten Wärmetauschers eine starke Abkühlung erfolgt, kann das Verfahren so geführt werden, dass an diesem Punkt relativ tiefe Temperaturen auftreten. Auf diese Weise ist es möglich, Kältekreisläufe entsprechend zu versorgen, beispielsweise für Lagerhallen, Kühlgeräte und dergleichen, so dass ein Zusatznutzen geschaffen werden kann.

Weiters betrifft die vorliegende Erfindung auch eine Vorrichtung zur Umwandlung thermischer Energie in mechanische Arbeit, mit mindestens zwei Wärmetauschern, die jeweils einen ersten und einen zweiten Arbeitsraum aufweisen, wobei der erste Arbeitsraum mit einer Quelle heißen Wärmeträgermediums verbunden ist.

Erfindungsgemäß ist diese Vorrichtung dadurch gekennzeichnet, dass die Wärmetauscher zweite Arbeitsräume aufweisen, die untereinander und mit einer Quelle eines Arbeitsmediums verbindbar sind und dass der zweite Arbeitsraum eines Wärmetauschers mit einem Pneumatik-Hydraulik-Wandler verbindbar ist.

Bevorzugt ist es dabei, wenn die Wärmetauscher vom ersten Wärmetauscher ausgehend jeweils ein kleineres Volumen aufweisen. Dadurch kann ein besonders hoher Gesamtwirkungsgrad erreicht werden.

In der Folge wird die vorliegende Erfindung anhand der in der Figur dargestellten Ausführungsbeispielen näher erläutert.

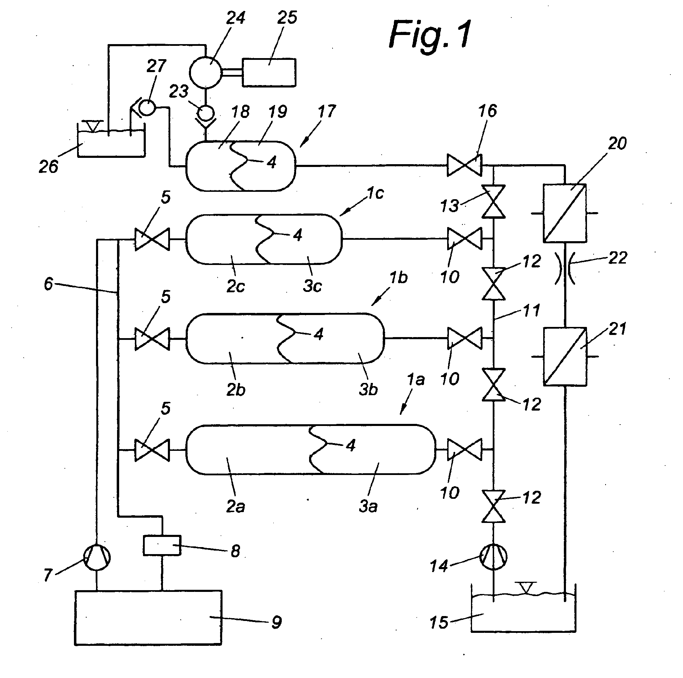

Fig. 1 zeigt ein Schaltbild einer Ausführungsvariante der vorliegenden Erfindung. Die erfindungsgemäße Vorrichtung besteht aus drei Wärmetauschern 1a, 1b, 1c, die als Blasenspeicher ausgebildet sind. Jeder Wärmetauscher 1a, 1b, 1c besitzt einen ersten Arbeitsraum 2a, 2b, 2c und einen zweiten Arbeitsraum 3a, 3b, 3c, die jeweils durch eine flexible Membran 4 voneinander getrennt sind. Aufgrund der Flexibilität und der Dünnwandigkeit der Membran 4 ist sichergestellt, dass im ersten bzw. zweiten Arbeitsraum 2a, 2b, 2c; 3a, 3b, 3c jedes Wärmetauschers 1a, 1b, 1c stets gleicher Druck und zumindest nach kurzer Übergangsphase auch im Wesentlichen gleiche Temperatur herrschen. Die ersten Arbeitsräume 2a, 2b, 2c der Wärmetauscher 1a, 1b, 1c sind über Ventile 5 mit einer Leitung 6 verbunden, in der das Wärmeträgermedium zirkuliert. Dieses Wärmeträgermedium wird durch eine Pumpe 7 umgewälzt und stammt von einer Brennkraftmaschine 9, die das Wärmeträgermedium beispielsweise als Kühlwasser benutzt. Gegebenenfalls kann hier auch eine nicht dargestellte Hochdruckpumpe vorgesehen sein, um die zweiten Arbeitsräume 3a, 3b, 3c jedes Wärmetauschers 1a, 1b, 1c durch Einpressen von Wärmeträgermedium in die ersten Arbeitsräume 2a, 2b, 2c der Wärmetauscher 1a, 1b, 1c vollständig zu entleeren.

Selbstverständlich sind auch andere Anbindungen einer Brennkraftmaschine möglich, beispielsweise über Wärmetauscher, um auch die Auspuffwärme zu nutzen. Im Zuge der Erfindung ist es aber auch möglich, andere Wärmequellen, wie etwa geothermale Energie, Sonnenenergie oder dergleichen für das erfindungsgemäße Verfahren zu verwenden. Ein Pufferspeicher 8 dient zur Einstellung des jeweils gewünschten Drucks.

Die zweiten Arbeitsräume 3a, 3b, 3c der Wärmetauscher 1a, 1b, 1c stehen über Ventile 10 mit einer Leitung 11 für ein Arbeitsmedium in Verbindung, wobei zwischen den einzelnen Wärmetauschern 1a, 1b, 1c weitere Ventile 12 vorgesehen sind. Alternativ dazu ist es möglich, die Ventile 10 als Mehrwegventile auszubilden. Das Arbeitsmedium wird über eine Pumpe 14 aus einem Vorratsbehälter 15 befördert. Über weitere Ventile 13 und 16 steht mit der Leitung 11 ein Pneumatik-Hydraulik-Wandler 17 in Verbindung, der einen Hydraulikraum 18 und einen Arbeitsraum 19 aufweist, die ebenfalls durch eine flexible Membran 4 voneinander getrennt sind.

Die Leitung 11 für das Arbeitsmedium setzt sich nach der Abzweigung zum Pneumatik-Hydraulik-Wandler 17 über einen ersten Kühler 20 und einen zweiten Kühler 21 fort, zwischen denen eine Drossel 22 angeordnet ist. Im Anschluss an den zweiten Kühler 21 wird das Arbeitsmedium zum Vorratsbehälter 15 weggeführt. Der Hydraulikkreislauf, der von dem Pneumatik-Hydraulik-Wandler 17 ausgeht, besteht aus einem ersten Rückschlagventil 23, hinter dem ein Hydraulikmotor 24 vorgesehen ist, der mit einem Generator 25 zur Zeugung von elektrischem Strom verbunden ist. Stromabwärts des Hydraulikmotors 24 wird das Hydraulikmedium einem Vorratsbehälter 26 zugeführt, von dem es über ein zweites Rückschlagventil 27 wieder zum Pneumatik-Hydraulik-Wandler 17 rückgeführt wird.

Das System ist auf einem Maximaldruck von 250 bar ausgelegt und der erste Wärmetauscher 1a besitzt ein Gesamtvolumen von 200 Liter. Der zweite Wärmetauscher 1b besitzt ein Gesamtvolumen von 160 Liter und der dritte Wärmetauscher 1c ein Gesamtvolumen von 120 Liter. Der Pneumatik-Hydraulik-Wandler 17 besitzt ein Volumen von 80 Liter.

Bei der praktischen Ausführung werden fünf der in Fig. 1 dargestellten Vorrichtungen parallel nebeneinander angeordnet und zeitlich versetzt zueinander betrieben, wie dies beispielsweise bei einer Fünfzylinderbrennkraftmaschine der Fall ist.

In der Folge wird das erfindungsgemäße Verfahren anhand des Schaltungsdiagramms von Fig. 1 näher erläutert.

Im Ausgangszustand besitzen die ersten Arbeitsräume 2a, 2b, 2c minimales Volumen, das heißt, dass die Membranen 4 praktisch vollständig auf der Seite des Wärmeträgermediums gelegen sind und die zweiten Arbeitsräume 3a, 3b, 3c praktisch das gesamte Innenvolumen der Wärmetauscher 1a, 1b, 1c ausmachen und mit Arbeitsmedium gefüllt sind. Das Arbeitsmedium im ersten Wärmetauscher 1a besitzt dabei im Wesentlichen Umgebungstemperatur und der Druck entspricht einem Vordruck von beispielsweise 5 bar, der als Mindestdruck im System aufrecht erhalten wird.

Im ersten Schritt wird das zum ersten Wärmetauscher 1a gehörige Ventil 5 geöffnet und heißes Wärmeträgermedium mit einer Temperatur von beispielsweise 100°C in den ersten Arbeitsraum 2a einströmen gelassen. Die Zufuhr wird beendet, sobald sich die Membran 4 in einer Mittelstellung befindet, das heißt, dass der erste und der zweite Arbeitsraum 2a, 3a etwa das gleiche Volumen aufweisen. Durch das dem ersten Wärmetauscher 1a zugeordnete erste Ventil 10 wird das überschüssige Arbeitsmedium in den Vorratsbehälter 15 rückgeführt. Nach Erreichen der Mittelstellung werden die Ventile 5 und 10 geschlossen, so dass das Arbeitsmedium im zweiten Arbeitsraum 3a durch das heiße Wärmeträgermedium im ersten Arbeitsraum 2a isochor erwärmt wird. Nach Herstellung des Temperaturausgleichs nach wenigen Sekunden liegt das Arbeitsmedium im zweiten Arbeitsraum 3a bei einer Temperatur von 80°C und einem Druck von 80 bar vor. Im dritten Schritt werden die Ventile 10 und 12 zwischen dem ersten Wärmetauscher 1a und dem zweiten Wärmetauscher 1b geöffnet, so dass das Arbeitsmedium aus dem zweiten Arbeitsraum 3a des ersten Wärmetauschers 1a in den zweiten Arbeitsraum 3b des zweiten Wärmetauschers 1b überströmen kann. Durch das dem zweiten Wärmetauscher 1b zugeordnete Ventil 5 wird Wärmeträgermedium in die Leitung 6 rückgeführt, bis etwa die Mittelstellung der Membran 4 erreicht ist. Danach werden sämtliche Ventile 5, 10, 12 geschlossen und es findet wiederum eine isochore Erwärmung des Arbeitsmediums im zweiten Arbeitsraum 3b des zweiten Wärmetauschers 1b statt. Vor der Erwärmung ist das Arbeitsmedium durch den Überströmvorgang auf eine Temperatur von 50°C abgekühlt worden und der Druck ist auf 60 bar gesunken. Nach der isochoren Erwärmung beträgt der Druck 120°C und die Temperatur 85°C.

In der Folge wird ein weiterer analoger Überström- und Erwärmungsvorgang zwischen dem zweiten und dem dritten Wärmetauscher 1b bzw. 1c durchgeführt. Das Arbeitsmedium erreicht letztlich eine Temperatur von 90°C bei einem Druck von 250 bar. Nach dem letzten Schritt werden die Ventile 10, 13 und 16 zwischen dem dritten Wärmetauscher 1c und dem Pneumatik-Hydraulik-Wandler 17 geöffnet, so dass das Arbeitsmedium in den Arbeitsraum 19 des Pneumatik-Hydraulik-Wandlers 17 einströmt. Dadurch wird das Hydraulikmedium über das erste Rückschlagventil 13 durch die Arbeitsmaschine 24 geführt, in der die mechanische Arbeit gewonnen wird und durch die der Generator 25 angetrieben wird.

Mit der erfindungsgemäßen Lösung ist es nicht nur möglich, mechanische Arbeit und damit elektrische Energie zu gewinnen, sondern es kann auch je nach Bedarf in den Kühlern 20 bzw. 21 Kälte gewonnen werden. Eine optimale Kälteausbeute ergibt sich dann, wenn das Arbeitsmedium im Kühler 20 bei hohem Druck auf Umgebungstemperatur abgekühlt wird, so dass nach der Drossel 22 extrem tiefe Temperaturen von beispielsweise -40°C vorliegen, die für Kälteprozesse genutzt werden können.

Ein besonderer Vorteil des erfindungsgemäßen Verfahrens und der erfindungsgemäßen Vorrichtung besteht darin, dass durch unterschiedliche Steuerung eine große Bandbreite an Betriebsparametern eingestellt werden kann und dadurch eine sehr große Flexibilität bei hohem Wirkungsgrad erreicht werden kann.

## Patentansprüche

1. Verfahren zur Umwandlung thermischer Energie in mechanische Arbeit mit folgenden Schritten:
- Zufuhr von heißem Wärmeträgermediums in einen ersten Arbeitsraum (2a) eines ersten Wärmetauschers (1a);
- Isochores Erwärmen einer ersten Menge eines Arbeitsmediums in einem zweiten Arbeitsraum (3a) des ersten Wärmetauschers (1a) durch das Wärmeträgermedium;
- **gekennzeichnet durch** wiederholtes Durchführen der folgenden Unterschritte:
• Überströmen lassen zumindest einer Teilmenge der ersten Menge des Arbeitsmediums vom zweiten Arbeitsraum (3a; 3b) des ersten Wärmetauschers (1a) bzw. des vorangehenden Wärmetauschers (1b) in einen zweiten Arbeitsraum (3b; 3c) eines weiteren, nachfolgenden Wärmetauschers (1b; 1c);
• Isochores Erwärmen der übergeströmten Teilmenge der ersten Menge eines Arbeitsmediums im zweiten Arbeitsraum (3b; 3c) des weiteren, nachfolgenden Wärmetauschers (1b; 1c) **durch** ein in einem ersten Arbeitsraum (2b; 2c) des weiteren, nachfolgenden Wärmetauschers (1b; 1c) vorliegendes Wärmeträgermedium;
- Verbinden des zweiten Arbeitsraums (3c) des weiteren, letzten Wärmetauschers (1c) mit einem Pneumatik-Hydraulik-Wandler (17) und Ausstoßen von einem Hydraulikmedium aus dem Wandler (17) **durch** den Druck des Arbeitsmediums.

2. Verfahren nach Anspruch 1, **dadurch gekennzeichnet, dass** nach Herstellen des Druckausgleichs zwischen dem zweiten Arbeitsraum (3a; 3b) des vorangehenden Wärmetauschers (1a; 1b) und dem zweiten Arbeitsraum (3b; 3c) des weiteren, nachfolgenden Wärmetauschers (1b; 1c) weiteres Wärmeträgermedium in den vorangehenden Wärmetauscher (1a; 1b) gepresst wird, um Arbeitsmedium aus dem zweiten Arbeitsraum (3a; 3b) des ersten Wärmetauschers (1a) bzw. des vorangehenden Wärmetauschers (1b) in einen zweiten Arbeitsraum (3b; 3c) eines weiteren, nachfolgenden Wärmetauschers (1b; 1c) überzuführen.

3. Verfahren nach Anspruch 2, **dadurch gekennzeichnet, dass** nach Herstellen des Druckausgleichs zwischen dem zweiten Arbeitsraum (3a; 3b) des ersten Wärmetauschers (1a) bzw. des vorangehenden Wärmetauschers (1b) und dem zweiten Arbeitsraum (3b; 3c) des nachfolgenden Wärmetauschers (1b; 1c) der zweite Arbeitsraum (3a; 3b) des ersten Wärmetauschers (1a) bzw. des vorangehenden Wärmetauschers (1b) vollständig entleert wird.

4. Verfahren nach einem der Ansprüche 1 bis 3, **dadurch gekennzeichnet, dass** nach der Beendigung des Ausstoßens von Hydraulikmedium die ersten Arbeitsräume (2a, 2b, 2c) aller Wärmetauscher (1a, 1b, 1c) durch Einbringen von Arbeitsmedium in die zweiten Arbeitsräume entleert werden.

5. Verfahren nach einem der Ansprüche 1 bis 4, **dadurch gekennzeichnet, dass** zwischen zwei und viel, vorzugsweise drei Schritte der isochoren Erwärmung des Arbeitsmediums durchgeführt werden.

6. Verfahren nach einem der Ansprüche 1 bis 5, **dadurch gekennzeichnet, dass** das Arbeitsmedium gasförmig ist.

7. Verfahren nach einem der Ansprüche 1 bis 5, **dadurch gekennzeichnet, dass** das Arbeitsmedium als Flüssigkeit/Gas-Phasengemisch vorliegt.

8. Verfahren nach einem der Ansprüche 1 bis 7, **dadurch gekennzeichnet, dass** der Druck des Arbeitsmediums im ersten Wärmetauscher nach der isochoren Erwärmung zwischen 50 und 100 bar beträgt.

9. Verfahren nach einem der Ansprüche 1 bis 8, **dadurch gekennzeichnet, dass** der Druck des Arbeitsmediums im ersten Wärmetauscher nach der Herstellung des Druckausgleichs zwischen 25 und 50 bar beträgt.

10. Verfahren nach einem der Ansprüche 1 bis 9, **dadurch gekennzeichnet, dass** das Arbeitsmedium einen Siedepunkt bei Umgebungsdruck aufweist, der zwischen -60°C und -20°C liegt.

11. Verfahren nach einem der Ansprüche 1 bis 10, **dadurch gekennzeichnet, dass** in regelmäßigen Abständen zeitlich versetzt mehrere Kreisprozesse gleichzeitig durchgeführt werden.

12. Verfahren nach Anspruch 11, **dadurch gekennzeichnet, dass** zwischen drei und sieben, vorzugsweise fünf Kreisprozesse gleichzeitig durchgeführt werden.

13. Verfahren nach einem der Ansprüche 1 bis 12, **dadurch gekennzeichnet, dass** das Wärmeträgermedium durch die Abwärme einer Brennkraftmaschine (9) mit innerer Verbrennung, durch Solarenergie oder durch geothermische Energie erwärmt wird.

14. Verfahren nach einem der Ansprüche 1 bis 13, **dadurch gekennzeichnet, dass** das Hydraulikmedium in einer Arbeitsmaschine (24) abgearbeitet wird, die vorzugsweise an einen Generator (25) zur Erzeugung von elektrischem Strom angeschossen ist.

15. Verfahren nach einem der Ansprüche 1 bis 14, **dadurch gekennzeichnet, dass** das Arbeitsmedium nach dem Ausstoßen des Hydraulikmediums in einem Kühler (20, 21) entspannt wird, um nach einer Drossel (22) Kälte zu erzeugen.

16. Vorrichtung zur Umwandlung thermischer Energie in mechanische Arbeit, mit mindestens zwei Wärmetauschern (1a, 1b, 1c), die jeweils einen ersten und einen zweiten Arbeitsraum (2a, 2b, 2c; 3a, 3b, 3c) aufweisen, wobei der erste Arbeitsraum (2a, 2b, 2c) mit einer Quelle heißen Wärmeträgermediums verbunden ist, **dadurch gekennzeichnet, dass** die Wärmetauscher (1a, 1b, 1c), zweite Arbeitsräume (3a; 3b; 3c) aufweisen, die untereinander und mit einer Quelle eines Arbeitsmediums verbindbar sind und dass der zweite Arbeitsraum (3a; 3b; 3c) eines Wärmetauschers (1a, 1b, 1c) mit einem Pneumatik-Hydraulik-Wandler (17) verbindbar ist.

17. Vorrichtung nach Anspruch 16, **dadurch gekennzeichnet, dass** die Wärmetauscher (1a, 1b, 1c) als Blasenspeicher ausgebildet sind.

18. Vorrichtung nach einem der Ansprüche 16 oder 17, **dadurch gekennzeichnet, dass** ein Kompressor (7) für die Zufuhr von Wärmeträgermedium in die ersten Arbeitsräume (2a, 2b, 2c) der Wärmetauscher (1a, 1b, 1c) vorgesehen ist.

19. Vorrichtung nach einem der Ansprüche 16 bis 18, **dadurch gekennzeichnet, dass** der Pneumatik-Hydraulik-Wandler (17) als Blasenspeicher ausgebildet ist.

20. Vorrichtung nach einem der Ansprüche 16 bis 19, **dadurch gekennzeichnet, dass** mehrere Gruppen bestehend aus Wärmetauschern (1a, 1b, 1c) und einem Pneumatik-Hydraulik-Wandler (17) parallel zueinander vorgesehen sind.

21. Vorrichtung nach Anspruch 20, **dadurch gekennzeichnet, dass** zwischen drei und sieben, vorzugsweise fünf Gruppen bestehend aus Wärmetauschern (1a, 1b, 1c) und einem Pneumatik-Hydraulik-Wandler (17) parallel zueinander vorgesehen sind.

22. Vorrichtung nach einem der Ansprüche 16 bis 21, **dadurch gekennzeichnet, dass** ein Wärmetauscher (1c) gegebenenfalls über einen Pneumatik-Hydraulik-Wandler (17) mit einer Arbeitsmaschine (24) verbindbar ist, die vorzugsweise an einen Generator (25) zur Stromerzeugung angeschlossen ist.

23. Vorrichtung nach einem der Ansprüche 16 bis 22, **dadurch gekennzeichnet, dass** ein Wärmetauscher (1c) Pneumatik-Hydraulik-Wandler (17) mit einer Kältemaschine verbindbar ist.

24. Vorrichtung nach einem der Ansprüche 16 bis 23, **dadurch gekennzeichnet, dass** der Kreislauf des Wärmeträgermediums mit einer Brennkraftmaschine (9) mit innerer Verbrennung, mit einer Solaranlage oder mit einer Anlage zur Nutzung von geothermischer Energie verbunden ist, die das Wärmeträgermedium erwärmt.

25. Vorrichtung nach einem der Ansprüche 16 bis 24, **dadurch gekennzeichnet, dass** der erste Wärmetauscher (1a) ein größeres Volumen aufweist als der nachfolgende Wärmetauscher (1b) und jeder weitere Wärmetauscher (1b) seinerseits ein größeres Volumen aufweist als der jeweils nachfolgende Wärmetauscher (1c).

## Claims

1. A method for converting thermal energy into mechanical work with the following steps:
- supply of a hot heat transfer medium to a first working chamber (2a) of a first heat exchanger (1a);
- isochoric heating of a first quantity of a working medium in a second working chamber (3a) of the first heat exchanger (1a) by the heat transfer medium;
- **characterized in** repeating the following sub-steps:
• allowing the transfer flow of at least a partial quantity of the first quantity of the working medium from the second working chamber (3a; 3b) of the first heat exchanger (1a) or the preceding heat exchanger (1b) to a second working chamber (3b; 3c) of a further subsequent heat exchanger (1b; 1c);
• isochoric heating of the transferred partial quantity of the first quantity of a working medium in the second working chamber (3b; 3c) of the further subsequent heat exchanger (1b; 1c) by a heat transfer medium present in a first working chamber (2b; 2c) of the further subsequent heat exchanger (1b; 1c);
- connecting the second working chamber (3c) of the further last heat exchanger (1c) with a pneumo-hydraulic converter (17) and ejection of a hydraulic medium from the converter (17) by the pressure of the working medium.

2. A method according to claim 1, **characterized in that** after establishing pressure compensation between the second working chamber (3a; 3b) of the preceding heat exchanger (1a; 1b) and the second working chamber (3b; 3c) of the subsequent heat exchanger (1b; 1c) further heat transfer medium is pressed into the preceding heat exchanger (1a; 1b) in order to transfer working medium from the second working chamber (3a; 3b) of the first heat exchanger (1a) or preceding heat exchanger (1b) to a second working chamber (3b; 3c) of a further subsequent heat exchanger (1b; 1c).

3. A method according to claim 2, **characterized in that** after establishing pressure compensation between the second working chamber (3a; 3b) of the first heat exchanger (1a) or the preceding heat exchanger (1b) and the second working chamber (3b; 3c) of the subsequent heat exchanger (1b; 1c) the second working chamber (3a; 3b) of the first heat exchanger (1a) or the preceding heat exchanger (1b) is emptied completely.

4. A method according to one of the claims 1 to 3, **characterized in that** the first working chambers (2a, 2b, 2c) of all heat exchangers (1a, 1b, 1c) are emptied after ending the ejection of hydraulic medium.

5. A method according to one of the claims 1 to 4, **characterized in that** between two and four, preferably three steps of isochoric heating of the working medium are carried out.

6. A method according to one of the claims 1 to 5, **characterized in that** the working medium is gaseous.

7. A method according to one of the claims 1 to 5, **characterized in that** the working medium is present as a liquid/gas phase mixture.

8. A method according to one of the claims 1 to 7, **characterized in that** the pressure of the working medium in the first heat exchanger is between 50 and 100 bars after isochoric heating.

9. A method according to one of the claims 1 to 8, **characterized in that** the pressure of the working medium in the first heat exchanger is between 25 and 50 bars after establishing the pressure compensation.

10. A method according to one of the claims 1 to 9, **characterized in that** the working medium has a boiling point at ambient pressure which lies between -60°C and -20°C.

11. A method according to one of the claims 1 to 10, **characterized in that** in regular intervals several cyclic processes are performed simultaneously in a time-shifted manner.

12. A method according to claim 11, **characterized in that** between three and seven, preferably five cyclic processes are performed simultaneously.

13. A method according to one of the claims 1 to 12, **characterized in that** the heat transfer medium is heated by the waste heat of an internal combustion engine (9), by solar energy or by geothermal energy.

14. A method according to one of the claims 1 to 13, **characterized in that** the hydraulic medium is processed in an engine (24) which is preferably connected to a generator (25) for generating electric power.

15. A method according to one of the claims 1 to 14, **characterized in that** the working medium is relaxed after the ejection of the hydraulic medium in order to generate refrigeration.

16. An apparatus for converting thermal energy into mechanical work, comprising at least two heat exchangers (1a, 1b, 1c) which each comprise a first and a second working chamber (2a, 2b, 2c; 3a, 3b, 3c), with the first working chamber (2a, 2b, 2c) being connected with a source of a hot heat transfer medium, **characterized in that** the heat exchangers (1a, 1b, 1c) comprise second working chambers (3a; 3b; 3c) which can be connected among each other and with a source of a working medium and that the second working chamber (3a; 3b; 3c) of a heat exchanger (1a, 1b, 1c) can be connected with a pneumo-hydraulic converter (17).

17. An apparatus according to claim 16, **characterized in that** the heat exchangers (1a, 1b, 1c) are configured as bladder accumulators.

18. An apparatus according to one of the claims 16 or 17, **characterized in that** a compressor (7) is provided for the supply of heat transfer medium to the first working chambers (2a, 2b, 2c) of the heat exchangers (1a, 1b, 1c).

19. An apparatus according to one of the claims 16 to 18, **characterized in that** the pneumo-hydraulic converter (17) is configured as a bladder accumulator.

20. An apparatus according to one of the claims 16 to 19, **characterized in that** several groups consisting of heat exchangers (1a, 1b, 1c) and a pneumo-hydraulic converter (17) are provided parallel with respect to each other.

21. An apparatus according to claim 20, **characterized in that** between three and seven, preferably five groups consisting of heat exchangers (1a, 1b, 1c) and a pneumo-hydraulic converter (17) are provided parallel with respect to each other.

22. An apparatus according to one of the claims 16 to 21, **characterized in that** a heat exchanger (1c) can be connected with an engine (24) which is preferably connected to a generator (25) for electric power generation.

23. An apparatus according to one of the claims 16 to 22, **characterized in that** a heat exchanger (1c) can be connected with a refrigerating machine.

24. An apparatus according to one of the claims 16 to 23, **characterized in that** the circulation of the heat transfer medium is connected with an internal combustion engine (9), with a solar plant or a plant for utilizing geothermal energy which heats the heat transfer medium.

25. An apparatus according to one of the claims 16 to 24, **characterized in that** the first heat exchanger (1a) has a larger volume than the subsequent heat exchanger (1b) and every further heat exchanger (1b) on its part has a larger volume than the respective subsequent heat exchanger (1c).

## Revendications

1. Procédé de conversion d'énergie thermique en énergie mécanique, comprenant les étapes suivantes :
- amenée de fluide caloporteur chaud dans une première enceinte de travail (2a) d'un premier échangeur de chaleur (la) ;
- chauffage isochore d'une première quantité de fluide de travail, dans une deuxième enceinte de travail (3a) du premier échangeur de chaleur (la), au moyen du fluide caloporteur ;
- **caractérisé par** l'accomplissement des sous-étapes suivantes :
• transfert d'au moins une quantité partielle de la première quantité de fluide de travail, de la deuxième enceinte de travail (3a ; 3b) du premier échangeur de chaleur (la) ou de l'échangeur de chaleur (1b) précédent, en une deuxième enceinte de travail (3b ; 3c) d'un autre échangeur de chaleur (1b; 1c), subséquent ;
• chauffage isochore de la quantité partielle transférée de la première quantité d'un fluide de travail, dans une deuxième enceinte de travail (3b ; 3c) de l'autre échangeur de chaleur (1b ; 1c) subséquent, au moyen d'un fluide caloporteur présent dans une première enceinte de travail (2b : 2c) de l'autre échangeur de chaleur (1b ; 1c) subséquent ;
- liaison de la deuxième enceinte de travail (3c) de l'autre et dernier échangeur de chaleur (1c) à un convertisseur pneumatique-hydraulique (17) et expulsion d'un fluide hydraulique hors du convertisseur (17), sous l'effet de la pression du fluide de travail.

2. Procédé selon la revendication 1, **caractérisé en ce que**, après établissement de l'équilibre de pression, entre la deuxième enceinte de travail (3a ; 3b) de l'échangeur de chaleur (1a ; 1b) précédent et de la deuxième enceinte de travail (3b ; 3c) de l'autre échangeur de chaleur (1b ; 1c) subséquent, l'autre fluide caloporteur, présent dans l'échangeur de chaleur (1a ; 1b) précédent, est comprimé pour faire passer du fluide de travail, issu de la deuxième enceinte de travail (3a ; 3b) du premier échangeur de chaleur (la) ou de l'échangeur de chaleur (1b) précédent, en une deuxième enceinte de travail (3b ; 3c) d'un autre échangeur de chaleur (1b ; 1c) subséquent.

3. Procédé selon la revendication 2, **caractérisé en ce que**, après établissement de l'équilibre de pression, entre la deuxième enceinte de travail (3a ; 3b) du premier échangeur de chaleur (1a) ou de l'échangeur de chaleur (1b) précédent et de la deuxième enceinte de travail (3b ; 3c) de l'échangeur de chaleur (1b ; 1c) subséquent, la deuxième enceinte de travail (3a ; 3b), du premier échangeur de chaleur (la), ou de l'échangeur de chaleur (1b) précédent, est complètement vidée.

4. Procédé selon la revendication 1 à 3, **caractérisé en ce que**, après achèvement de l'expulsion de fluide hydraulique, les premières enceintes de travail (2a, 2b, 2c) de tous les échangeurs de chaleur (1a, 1b, 1c) sont vidées par introduction de fluide de travail dans les deuxièmes enceints de travail.

5. Procédé selon l'une des revendications 1 à 4, **caractérisé en ce qu'**entre deux et quatre, de préférence trois, étapes, du chauffage isochore du fluide de travail sont effectuées.

6. Procédé selon l'une des revendications 1 à 5, **caractérisé en ce que** le fluide de travail se présente sous forme gazeuse.

7. Procédé selon l'une des revendications 1 à 7, **caractérisé en ce que** le fluide de travail se présente sous la forme de mélange de phases gaz/liquide.

8. Procédé selon l'une des revendications 1 à 7, **caractérisé en ce que** la pression du fluide de travail dans le premier échangeur de chaleur, après le chauffage isochore, est d'une valeur comprise dans la fourchette entre 50 et 100 bar.

9. Procédé selon l'une des revendications 1 à 8, **caractérisé en ce que** la pression du fluide de travail dans un deuxième échangeur de chaleur, après l'établissement de l'équilibre de pression, est d'une valeur comprise dans la fourchette entre 25 et 50 bar.

10. Procédé selon l'une des revendications 1 à 9, **caractérisé en ce que** le fluide de travail présente un point d'ébullition, à la pression ambiante, compris dans la fourchette entre -60°C et -20°C.

11. Procédé selon l'une des revendications 1 à 10, **caractérisé en ce que** plusieurs processus circuitaires sont effectués simultanément, en étant décalés temporellement selon des espacements réguliers.

12. Procédé selon la revendication 11, **caractérisé en ce que**, entre trois et sept, de préférence cinq, processus circuitaires, sont effectués simultanément.

13. Procédé selon l'une des revendications 1 à 12, **caractérisé en ce que** le fluide caloporteur est chauffé par la chaleur de dissipation d'une machine à combustible (9) à combustion interne, par l'énergie solaire, ou par de l'énergie géothermique.

14. Procédé selon l'une des revendications 1 à 13, **caractérisé en ce que** le fluide hydraulique est travaillé dans une machine de travail (24), raccordée de préférence à un générateur (25), pour générer du courant électrique.

15. Procédé selon l'une des revendications 1 à 14, **caractérisé en ce que** le fluide de travail, après expulsion du fluide hydraulique, est détendu dans un refroidisseur (20, 21), pour produire du froid, après être passé par un étranglement (22).

16. Dispositif de conversion d'énergie thermique en énergie mécanique, comprenant au moins deux échangeurs de chaleur (1a, 1b, 1c), présentant chacun une première et une deuxième enceinte de travail (2a, 2b, 2c ; 3a, 3b, 3c), la première enceinte de travail (2a, 2b, 2c) étant reliée à une source de fluide caloporteur chaud, **caractérisé en ce que** les échangeurs de chaleur (1a, 1b, 1c) présentent des deuxièmes enceintes de travail (3a ; 3b ; 3c), susceptibles d'être reliées les unes les autres et à une source d'un fluide de travail, et **en ce que** la deuxième enceinte de travail (3a ; 3b ; 3c) d'un échangeur de chaleur (1a, 1b, 1c) est susceptible d'être reliée à un convertisseur pneumatique-hydraulique (17).

17. Dispositif selon la revendication 16, **caractérisé en ce que** les échangeurs de chaleur (1a, 1b, 1c) sont réalisés sous la forme d'accumulateurs à bulles.

18. Dispositif selon l'une des revendications 16 ou 17, **caractérisé en ce qu'**un compresseur (7) est prévu, pour l'apport de fluide caloporteur dans les premières enceintes de travail (2a, 2b, 2c) des échangeurs de chaleur (1a, 1b, 1c).

19. Dispositif selon l'une des revendications 16 à 18, **caractérisé en ce que** le convertisseur pneumatique-hydraulique (17) est réalisé sous la forme d'accumulateurs à bulles.

20. Dispositif selon l'une des revendications 16 à 19, **caractérisé en ce que** plusieurs groupes, composés d'échangeurs de chaleur (1a, 1b, 1c) et d'un convertisseur pneumatique-hydraulique (17), sont prévus, parallèlement les uns aux autres.

21. Dispositif selon la revendication 20, **caractérisé en ce que**, entre trois et sept, de préférence cinq, groupes, composés d'échangeurs de chaleur (1a, 1b, 1c) et d'un convertisseur pneumatique-hydraulique (17), sont prévus, parallèlement les uns aux autres.

22. Dispositif selon l'une des revendications 16 à 21, **caractérisé en ce qu'**un échangeur de chaleur (1c) est susceptible d'être relié, le cas échéant par un convertisseur pneumatique-hydraulique (17), à une machine de travail (24), raccordée, de préférence, à un générateur (25), pour la génération de courant électrique.

23. Dispositif selon l'une des revendications 16 à 22, **caractérisé en ce qu'**un échangeur de chaleur (1c) est relié, par un convertisseur pneumatique-hydraulique (17), à une machine frigorifique.

24. Dispositif selon l'une des revendications 16 à 23, **caractérisé en ce que** le circuit du fluide caloporteur est relié à une machine à combustible (9) à combustion interne, à une installation solaire, ou à une installation d'utilisation de l'énergie géothermique, chauffant le fluide caloporteur.

25. Dispositif selon l'une des revendications 16 à 24, **caractérisé en ce que** le premier échangeur de chaleur (la) présente un plus grand volume que l'échangeur de chaleur (1b) subséquent, et chaque autre échangeur de chaleur (1b), de son côté, présente un plus gros volume que l'échangeur de chaleur (1c), chaque fois, subséquent.
